# EUROPEAN PATENT SPECIFICATION

(11) **EP 3 605 654 B1**
(45) Date of publication and mention of the grant of the patent: **17.01.2024**
(21) Application number: 18777570.5
(22) Date of filing: 20.03.2018
(51) Int. Cl.: H01M 50/46, C08K 5/41, C08L 101/00, H01M 4/13, H01M 4/139, H01M 10/0566, H01M 10/058, H01M 10/0525, C08L 101/10

(54) **SLURRY COMPOSITION FOR NONAQUEOUS SECONDARY BATTERY ADHESIVE LAYERS, PRODUCTION METHOD AND USE**
AUFSCHLÄMMUNGSZUSAMMENSETZUNG FÜR HAFTSCHICHTEN EINER WASSERFREIEN SEKUNDÄRBATTERIE, HERSTELLUNGSVERFAHREN UND VERWENDUNG
COMPOSITION DE SUSPENSION ÉPAISSE DESTINÉE À DES COUCHES ADHÉSIVES D'ACCUMULATEURS NON AQUEUX, PROCÉDÉ DE PRODUCTION ET UTILISATION

(30) Priority: 31.03.2017 JP 2017070746
(43) Date of publication of application: 05.02.2020
(73) Proprietor: Zeon Corporation, Tokyo 100-8246 (JP)
(72) Inventor: TANAKA, Keiichiro, Tokyo 100-8246 (JP); SUGIMOTO, Takumi, Tokyo 100-8246 (JP); KANEDA, Takuya, Tokyo 100-8246 (JP)
(74) Representative: Maiwald GmbH
(86) International application number: PCT/JP2018/011167
(87) International publication number: WO 2018/180811

(56) References cited:
- EP-A1- 2 960 968
- EP-A1- 2 988 351
- WO-A1-2015/064411
- JP-A- 2015 088 253
- JP-A- 2016 048 670

## Description

### Field

The present invention relates to a slurry composition for an adhesive layer of a non-aqueous secondary battery.

### Background

In recent years, mobile terminals such as notebook-type personal computers, cellular phones, and personal digital assistants (PDAs) are increasingly widespread. As a secondary battery used as a power source for these mobile terminals, non-aqueous secondary batteries such as lithium ion secondary batteries are often used.

Examples of the components of a non-aqueous secondary battery may include a positive electrode, a negative electrode, and a separator for preventing a short circuit between the positive electrode and the negative electrode. For forming a layer contained in these components, slurry compositions having various formulations are being studied (Patent Literatures 1 to 3).

### Citation List

### Patent Literature

Patent Literature 1: International Publication No. 2015/145967 (corresponding publication: U.S. patent application publication No. 2016/351873)
Patent Literature 2: International Publication No. 2014/192238 (corresponding publication: U.S. patent application publication No. 2016/118663)
Patent Literature 3: Japanese Patent Application Laid-Open No. 2014-160651 A
Patent Literature 4: EP 2 988 351 A1
Patent Literature 5: EP 2 960 968 A1

### Summary

### Technical Problem

For bonding an electrode and a separator, an adhesive layer is sometimes disposed to the electrode or the separator. For improving battery performance, the thickness of the adhesive layer is required to be as thin as possible. The adhesive layer is formed by, for example, applying a slurry composition for an adhesive layer onto a substrate, and drying the applied slurry composition. An example of the applying method may be a gravure technique. However, when a gravure roll is rotated at high speed for forming a thin adhesive layer, the slurry composition foams, which sometimes inhibited the slurry composition from being applied at high speed. Therefore, the slurry composition is required to have a favorable defoaming property.

On the other hand, if components are not uniformly dispersed in the slurry composition, application unevenness may occur, which may cause a produced adhesive layer to become non-uniform. As a result, a reaction at an electrode sometimes becomes non-uniform, and metal can be deposited on the surface of the electrode.

Furthermore, the adhesive layer is required to have the function of favorably bonding battery members such as an electrode and a separator (adhesiveness).

Therefore, an object of the present invention is to provide: a slurry composition for an adhesive layer of a non-aqueous secondary battery having a favorable defoaming property, the adhesive layer formed with which suppresses metal deposition on an electrode surface and also has favorable adhesiveness; an adhesive layer for a non-aqueous secondary battery which suppresses metal deposition on an electrode surface and has favorable adhesiveness; and a non-aqueous secondary battery in which adhesive strength between an electrode and a separator is favorable, and metal deposition on an electrode surface is suppressed.

### Solution to Problem

The present inventor intensively conducted researches for solving the aforementioned problem. As a result, the present inventor has found that a slurry composition including a specific particulate polymer as a core-shell structure body, a specific content ratio of a sulfosuccinic acid ester or a salt thereof, and water can achieve, in a balanced manner, a favorable defoaming property, suppression of metal deposition on an electrode surface, and formation of an adhesive layer having favorable adhesiveness. Thus, the present invention has been accomplished.

That is, the present invention is as follows:
<1> A slurry composition for an adhesive layer of a non-aqueous secondary battery comprising a particulate polymer, a sulfosuccinic acid ester or a salt thereof, and water, wherein
   the particulate polymer is a core-shell structure body which has a core portion and a shell portion covering at least a portion of an outer surface of the core portion, and
   a content ratio of the sulfosuccinic acid ester or the salt thereof is 0.5 part by weight or more, and 5 parts by weight or less relative to 100 parts by weight of the particulate polymer.
<2> The slurry composition for an adhesive layer of a non-aqueous secondary battery according to <1>, wherein a swelling degree of the particulate polymer to the electrolytic solution is more than 1 time and 4 times or less.
<3> The slurry composition for an adhesive layer of a non-aqueous secondary battery according to <1> or <2>, wherein the shell portion covers a part of the outer surface of the core portion.
<4> A method for producing an adhesive layer for a non-aqueous secondary battery, comprising: forming a film of a slurry composition for an adhesive layer of a non-aqueous secondary battery using the slurry composition for an adhesive layer of a non-aqueous secondary battery according to any one of <1> to <3>, and drying the film to obtain an adhesive layer for a non-aqueous secondary battery.
<5> An adhesive layer for a non-aqueous secondary battery formed by using the slurry composition for an adhesive layer of a non-aqueous secondary battery according to any one of <1> to <3>.
<6> An adhesive layer for a non-aqueous secondary battery comprising a particulate polymer, and a sulfosuccinic acid ester or a salt thereof, wherein
   the particulate polymer is a core-shell structure body which has a core portion and a shell portion covering at least a portion of an outer surface of the core portion, and
   a content ratio of the sulfosuccinic acid ester or the salt thereof is 0.5 part by weight or more, and 5 parts by weight or less relative to 100 parts by weight of the particulate polymer.
<7> A non-aqueous secondary battery comprising a positive electrode, a negative electrode, a separator, and an electrolytic solution, wherein
   one or more selected from the group consisting of the positive electrode, the negative electrode, and the separator includes the adhesive layer for a non-aqueous secondary battery according to <5> or <6>.

### Advantageous Effects of Invention

The present invention can provide: a slurry composition for an adhesive layer of a non-aqueous secondary battery having a favorable defoaming property, the adhesive layer formed with which suppresses metal deposition on an electrode surface and also has favorable adhesiveness; an adhesive layer for a non-aqueous secondary battery which suppresses metal deposition on an electrode surface and has favorable adhesiveness; and a non-aqueous secondary battery in which adhesive strength between an electrode and a separator is favorable, and metal deposition on an electrode surface is suppressed.

### Brief Description of Drawings

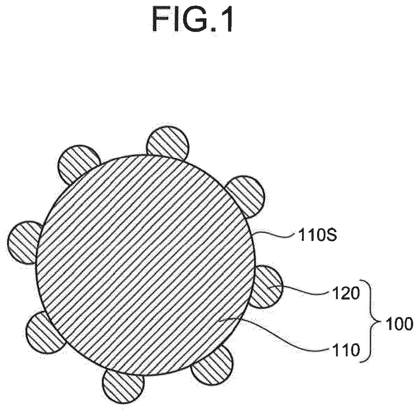

FIG. 1 is a cross-sectional view schematically illustrating an example of the particulate polymer.

### Description of Embodiments

Hereinafter, the present invention will be described in detail with reference to embodiments and examples. However, the present invention is not limited to the following embodiments and examples, and may be freely modified for implementation without departing from the scope of claims of the present invention and the scope of their equivalents.

In the following description, the term "(meth)acrylic acid" encompasses acrylic acid, methacrylic acid, and a mixture thereof. The term "(meth)acrylate" also encompasses an acrylate, a methacrylate, and a mixture thereof. In addition, the term "(meth)acrylonitrile" encompasses acrylonitrile, methacrylonitrile, and a mixture thereof.

Furthermore, that a certain substance is water-soluble means that, when 0.5 g of the substance is dissolved in 100 g of water at 25°C, an insoluble matter in the solution is 0% by weight or more and less than 1.0% by weight. Also, that a certain substance is water-insoluble means that, when 0.5 g of the substance is dissolved in 100 g of water at 25°C, an insoluble matter in the solution is 90% by weight or more and 100% by weight or less.

In a polymer produced by the copolymerization of a plurality of types of monomers, the ratio of a structural unit formed by the polymerization of a certain monomer in the polymer usually coincides with the ratio (charge ratio) of the certain monomer relative to all monomers used for the polymerization of the polymer.

The "electrode plate" encompasses not only a rigid plate-shape member but also a flexible sheet and film.

The "monomer composition" is used as a term which refers to not only a composition containing two or more types of monomers but also refers to one type of monomer.

### [1. Slurry composition for adhesive layer of non-aqueous secondary battery]

The slurry composition for an adhesive layer of a non-aqueous secondary battery (hereinafter, sometimes appropriately referred to as a slurry composition) according to the present invention includes a particulate polymer, a sulfosuccinic acid ester or a salt thereof, and water.

### [1.1. Particulate polymer]

### [1.1.1. Core-shell structure body]

The particulate polymer is a core-shell structure body which has a core portion and a shell portion covering at least a portion of the outer surface of the core portion. When the particulate polymer is the core-shell structure body, there can be obtained an adhesive layer which can favorably bond battery members such as an electrode plate and a separator substrate with each other. In particular, the adhesive layer can favorably bond battery members with each other even when the thickness of the adhesive layer is relatively thin (for example, about 2 µm).

The particulate polymer is usually a non-electroconductive particle. When the non-electroconductive particle is charged into the adhesive layer, the insulation of the adhesive layer can be enhanced. Accordingly, when the adhesive layer is disposed between a positive electrode and a negative electrode, a short circuit in a non-aqueous secondary battery can be stably suppressed.

The shell portion is a portion located outside the core portion. The shell portion may be a part that partially covers the outer surface of the core portion. Alternatively, the shell portion may be a part that entirely covers the outer surface of the core portion. Preferably, the shell portion is a part that partially covers the outer surface of the core portion.

FIG. 1 is a cross-sectional view schematically illustrating an example of the particulate polymer. As illustrated in FIG. 1, a particulate polymer 100 has a core-shell structure including a core portion 110 and a shell portion 120. Herein, the core portion 110 is a portion located inside the shell portion 120 of the particulate polymer 100. The shell portion 120 is a portion covering an outer surface 110S of the core portion 110, and usually an outermost portion of the particulate polymer 100. The shell portion 120 does not cover the entirety of the outer surface 110S of the core portion 110, but covers a part of the outer surface 110S of the core portion 110.

Even when the outer surface of the core portion appears to be completely covered by the shell portion, the shell portion actually partly covers the outer surface of the core portion if a pore extending through the shell portion is formed.

Whether or not the particulate polymer is the core-shell structure body may be confirmed from the observation result of the cross-sectional structure of the particulate polymer. Specifically, the confirmation may be performed by the following method.

First, the particulate polymer is sufficiently dispersed and then embedded in an epoxy resin which is curable at normal temperature, to prepare a block piece containing the particulate polymer. Subsequently, the block piece is cut out into a thin piece having a thickness of 80 nm to 200 nm by a microtome equipped with a diamond blade to prepare a measurement sample. After that, if necessary, the measurement sample is subjected to a dyeing treatment with, for example, ruthenium tetroxide or osmium tetroxide.

Subsequently, this measurement sample is observed with a transmission electron microscope (TEM) to check if the particulate polymer is the core-shell structure body.

The ratio at which the shell portion covers the outer surface of the core portion may be measured from the observation result of the cross-sectional structure of the particulate polymer.

Although the form of the shell portion is not particularly limited, it is preferable that the shell portion is constituted by polymer particles. When the shell portion is constituted by polymer particles, the plurality of particles constituting the shell portion may be stacked in the radial direction of the particulate polymer. However, it is preferable that in the radial direction of the particulate polymer, the particles constituting the shell portion are not stacked, and a single layer of the polymer particles constitute the shell portion.

### [1.1.2. Swelling degree of particulate polymer]

The swelling degree of the particulate polymer to the electrolytic solution is preferably more than 1 time, more preferably 1.2 times or more, and still more preferably 1.5 times or more, and is preferably 4 times or less, more preferably 3.5 times or less, and still more preferably 3 times or less. Thereby metal deposition on a negative electrode surface can be suppressed, and an adhesive layer having still better adhesiveness can be formed.

Herein, the swelling degree of the particulate polymer "to" an electrolytic solution is the ratio of the change in weight caused by immersing a measurement target into an electrolytic solution. Specifically, the particulate polymer is molded into a film shape, and the molded product is immersed into an electrolytic solution at 60°C for 72 hours. The weights before and after the immersion are measured, and the swelling degree can be calculated from the change in weight. Specifically, the swelling degree to an electrolytic solution is a value measured by a method described in the section Evaluation method in Examples.

The electrolytic solution used in measuring the swelling degree is a solution in which LiPF₆ as a support electrolyte is dissolved in a mixed solvent of ethylene carbonate, diethyl carbonate, and vinylene carbonate (volume mixing ratio: ethylene carbonate / diethyl carbonate / vinylene carbonate = 68.5/30/1.5; SP value: 12.7 (cal/cm³)^{1/2}) at a concentration of 1 mol/L relative to the solvent. As described herein, the SP value means a solubility parameter.

An example of the method for adjusting the swelling degree of the particulate polymer may be appropriately selecting the type and amount of a monomer for producing the particulate polymer in consideration of the SP value of the electrolytic solution. In general, when the SP value of a polymer is close to the SP value of an electrolytic solution, the polymer tends to easily swell in the electrolytic solution. On the other hand, when the SP value of a polymer is far from the SP value of an electrolytic solution, the polymer tends not to swell in the electrolytic solution.

The SP value can be calculated by a method introduced in Hansen Solubility Parameters: A User's Handbook, 2nd Ed. (CRC Press).

The SP value of an organic compound can be estimated from the molecular structure of the organic compound. Specifically, calculation may be performed by a simulation software (for example, "HSPiP" (http=//www.hansen-solubility.com)) which can calculate the SP value from a SMILE formula. This simulation software performs calculation based on a theory described in Hansen SOLUBILITY PARAMETERS: A User's Handbook, Second Edition, Charles M. Hansen.

### [1.1.3. Polymer constituting particulate polymer]

The core portion and the shell portion are usually constituted by respective polymers different from each other.

### [1.1.3.1. Polymer of core portion]

The monomer unit contained in the polymer of the core portion is not particularly limited, and examples thereof may include a (meth)acrylic acid ester monomer unit having a structure formed by polymerizing a (meth)acrylic acid ester monomer such as methyl acrylate, ethyl acrylate, methyl methacrylate, ethyl methacrylate, butyl acrylate, butyl methacrylate, and 2-ethylhexyl acrylate; a (meth)acrylonitrile monomer unit having a structure formed by polymerizing a (meth)acrylonitrile monomer such as acrylonitrile, and methacrylonitrile; a crosslinkable monomer unit having a structure formed by polymerizing a crosslinkable monomer; a vinyl chloride-based monomer unit having a structure formed by polymerizing a vinyl chloride-based monomer such as vinyl chloride, and vinylidene chloride; a vinyl acetate-based monomer unit having a structure formed by polymerizing a vinyl acetate-based monomer such as vinyl acetate; an aromatic vinyl monomer unit having a structure formed by polymerizing an aromatic vinyl monomer such as styrene, α-methylstyrene, styrenesulfonic acid, butoxystyrene, and vinylnaphthalene; a vinylamine-based monomer unit having a structure formed by polymerizing a vinylamine-based monomer such as vinylamine; a vinylamide-based monomer unit having a structure formed by polymerizing a vinylamide-based monomer such as N-vinyl formamide, and N-vinyl acetamide; a (meth)acrylamide monomer unit having a structure formed by polymerizing a (meth)acrylamide monomer such as acrylamide, and methacrylamide; a fluorine-containing acrylate monomer unit having a structure formed by polymerizing a fluorine-containing acrylate monomer such as 2-(perfluorohexyl)ethyl methacrylate, and 2-(perfluorobutyl)ethyl acrylate; a maleimide monomer unit; a maleimide derivative monomer unit having a structure formed by polymerizing a maleimide derivative monomer such as phenylmaleimide; and a diene-based monomer unit having a structure formed by polymerizing a diene-based monomer such as 1,3-butadiene, and isoprene. In the polymer of the core portion, as these monomer units, one type thereof may be solely contained, and two or more types thereof may also be contained in combination at any ratio. The polymer of the core portion may contain units other than the monomers listed above.

Herein, the "monomer unit" refers to a structural unit having a structure formed by polymerizing the monomer.

As the (meth)acrylic acid ester monomer, methyl (meth)acrylate and butyl (meth)acrylate are preferable.

The crosslinkable monomer is a monomer capable of forming a crosslinked structure during or after polymerization by heating or irradiation with energy rays. When the particulate polymer contains the crosslinkable monomer unit, the swelling degree of the particulate polymer can be easily confined within the aforementioned range.

Examples of the crosslinkable monomer may include a polyfunctional monomer having two or more polymerization reactive groups in the monomer. Examples of such a polyfunctional monomer may include a divinyl compound such as divinylbenzene; alkenyl (meth)acrylate such as allyl methacrylate; a di(meth)acrylic acid ester compound such as ethylene dimethacrylate, diethylene glycol dimethacrylate, ethylene glycol dimethacrylate, diethylene glycol diacrylate, and 1,3-butylene glycol diacrylate; a tri(meth)acrylic acid ester compound such as trimethylol propane trimethacrylate, and trimethylol propane triacrylate; and an ethylenically unsaturated monomer containing an epoxy group such as an allyl glycidyl ether and glycidyl methacrylate. Among these, from the viewpoint of easily controlling the swelling degree of the polymer of the core portion, a dimethacrylic acid ester compound, alkenyl (meth)acrylate, and an ethylenically unsaturated monomer containing an epoxy group are preferable, alkenyl (meth)acrylate is more preferable, and allyl (meth)acrylate is still more preferable. As these compounds, one type thereof may be solely used, and two or more types thereof may also be used in combination at any ratio.

In general, as the ratio of the crosslinkable monomer unit in the polymer increases, the swelling degree of the polymer to the electrolytic solution tends to decrease. Therefore, the ratio of the crosslinkable monomer unit is preferably determined in consideration of the type and amount of the monomer used. The specific ratio of the crosslinkable monomer unit in the polymer of the core portion is preferably 0.1% by weight or more, more preferably 0.2% by weight or more, and particularly preferably 0.5% by weight or more, and is preferably 5% by weight or less, more preferably 4% by weight or less, and particularly preferably 3% by weight or less. By setting the ratio of the crosslinkable monomer unit to be equal to or higher than the lower limit value of the aforementioned range, an adhesive layer capable of favorably bonding the battery members such as the electrode plate and the separator substrate to each other can be obtained. By setting the ratio to be equal to or lower than the upper limit value, the life of the secondary battery can be prolonged.

It is preferable that the particulate polymer includes a (meth)acrylic acid ester monomer unit, a (meth)acrylonitrile monomer unit, and an alkenyl (meth)acrylate monomer unit. This facilitates control of the swelling degree of the particulate polymer. In addition, the ion diffusivity of the adhesive layer can be further enhanced.

The ratio of the total of the (meth)acrylic acid ester monomer unit and the (meth)acrylonitrile monomer unit in the polymer of the core portion is preferably 50% by weight or more, more preferably 55% by weight or more, still more preferably 60% by weight or more, and particularly preferably 70% by weight or more, and is preferably 99% by weight or less. By confining the ratio of the (meth)acrylic acid ester monomer unit and the (meth)acrylonitrile monomer unit within the aforementioned range, the swelling degree can be easily controlled within the aforementioned range. In addition, the adhesiveness of the adhesive layer can be enhanced, and metal deposition on the negative electrode surface can be suppressed. Further, the ion diffusivity of the adhesive layer can be enhanced, and the low-temperature output property of the non-aqueous secondary battery can be improved.

The above-mentioned "total of the (meth)acrylic acid ester monomer unit and the (meth)acrylonitrile monomer unit in the polymer of the core portion" means that it may include only the (meth)acrylic acid ester monomer unit, may include only the (meth)acrylonitrile monomer unit, and may include the (meth)acrylic acid ester monomer unit and the (meth)acrylonitrile monomer unit in combination.

The polymer of the core portion may include an acid group-containing monomer unit. The acid group-containing monomer unit is a structural unit having a structure formed by polymerizing a monomer having an acid group. As the acid group-containing monomer, a monomer that is the same as the acid group-containing monomer that may be included in the shell portion to be described later is used. Among these, as the acid group-containing monomer, a monomer having a carboxylic acid group is preferable. Among these, a monocarboxylic acid is preferable, and (meth)acrylic acid is more preferable.

As the acid group-containing monomers, one type thereof may be solely used, and two or more types thereof may also be used in combination at any ratio.

### [1.1.3.2. Polymer of shell portion]

The monomer unit contained in the polymer of the shell portion is not particularly limited, and examples thereof may include those that are the same as the monomer units exemplified as the monomer units contained in the polymer of the core portion.

Among these monomer units, an aromatic vinyl monomer unit is preferable.

Among the aromatic vinyl monomer units, a styrene derivative monomer unit such as styrene and styrene sulfonic acid is more preferable. When the polymer of the shell portion contains an aromatic vinyl monomer unit, the swelling degree of the particulate polymer can be easily controlled. In addition, the adhesive layer can favorably bond the battery members such as the electrode plate and the separator substrate to each other.

The ratio of the aromatic vinyl monomer unit in the polymer of the shell portion is preferably 20% by weight or more, more preferably 40% by weight or more, still more preferably 50% by weight or more, still further preferably 60% by weight or more, and particularly preferably 80% by weight or more, and is preferably 100% by weight or less, more preferably 99.5% by weight or less, and still more preferably 99% by weight or less. By confining the ratio of the aromatic vinyl monomer unit within the aforementioned range, the swelling degree of the particulate polymer can be easily controlled within the aforementioned range. In addition, the adhesive layer can favorably bond the battery members such as the electrode plate and the separator substrate to each other.

The polymer of the core portion may contain monomer units other than the monomer units exemplified above.

The polymer of the shell portion may include an acid group-containing monomer unit.

Examples of the acid group-containing monomer corresponding to the acid group-containing monomer unit may include a monomer having a carboxylic acid group, a monomer having a sulfonic acid group, and a monomer having a monomer having a phosphoric acid group.

Examples of the monomer having a carboxylic acid group may include a monocarboxylic acid and a dicarboxylic acid. Examples of the monocarboxylic acid may include acrylic acid, methacrylic acid, and crotonic acid. Examples of the dicarboxylic acid may include maleic acid, fumaric acid, and itaconic acid.

Examples of the monomer having a sulfonic acid group may include vinylsulfonic acid, methylvinylsulfonic acid, (meth)allylsulfonic acid, ethyl (meth)acrylic acid-2-sulfonate, 2-acrylamide-2-methylpropane sulfonic acid, and 3-allyloxy-2-hydroxypropane sulfonic acid.

Examples of the monomer having a phosphoric acid group may include 2-(meth)acryloyloxyethyl phosphate, methyl-2-(meth)acryloyloxyethyl phosphate, and ethyl-(meth)acryloyloxyethyl phosphate.

Among these, as the acid group-containing monomer, a monomer having a carboxylic acid group is preferable. Among these, a monocarboxylic acid is preferable, and (meth)acrylic acid is more preferable.

As the acid group-containing monomer, one type thereof may be solely used, and two or more types thereof may also be used in combination at any ratio.

The ratio of the acid group-containing monomer unit in the polymer of the shell portion is preferably 0.1% by weight or more, and more preferably 1% by weight or more, and is preferably 20% by weight or less, more preferably 10% by weight or less, and still more preferably 7% by weight or less. By confining the ratio of the acid group-containing monomer unit within the aforementioned range, the dispersibility of the particulate polymer in the slurry composition can be improved, and good adhesiveness can be exhibited over the entire surface of the adhesive layer.

### [1.1.4. Glass transition temperature of particulate polymer]

The glass transition temperature of the particulate polymer is preferably 25°C or higher, more preferably 30°C or higher, and still more preferably 35°C or higher, and is preferably 150°C or lower, more preferably 125°C or lower, and still more preferably 100°C or lower.

### [1.1.5. Optional component]

The particulate polymer may include optional components other than the core and shell portions described above as long as the advantageous effects of the present invention are not significantly impaired.

For example, a portion formed of a polymer different from that of the core portion may be provided inside the core portion. As a specific example, seed particles used when the particulate polymer is produced by a seed polymerization method may remain inside the core portion.

However, from the viewpoint of remarkably exhibiting the advantageous effects of the present invention, it is preferable that the particulate polymer has only the core portion and the shell portion.

### [1.1.6. Amount of particulate polymer]

The amount of the particulate polymer in the slurry composition is preferably set so that the ratio of the particulate polymer in the adhesive layer falls within a specific range. Specifically, the ratio of the particulate polymer in the adhesive layer is preferably 0.1% by weight or more, preferably 50% by weight or more, more preferably 55% by weight or more, and particularly preferably 60% by weight or more, and is preferably 99.9% by weight or less, more preferably 99% by weight or less, and particularly preferably 98% by weight or less. When the amount of the particulate polymer falls within the aforementioned range, the bonding force between the adhesive layer and the separator substrate or the electrode plate in the electrolytic solution is further enhanced, and adhesiveness of the adhesive layer is improved. In addition, ion diffusivity can be enhanced.

### [1.1.7. Method for producing particulate polymer]

The particulate polymer may be produced, for example, by using a monomer for a polymer of the core portion and a monomer for a polymer of the shell portion, and polymerizing them in stages while changing the ratio of these monomers over time. In particular, the particulate polymer may be obtained by a continuous multistage emulsion polymerization method and a multistage suspension polymerization method in which the polymers of the preceding stage are coated sequentially by the polymers of the subsequent stage.

An example in which a particulate polymer having a core-shell structure is obtained by a multistage emulsion polymerization method will be described.

In the polymerization, as an emulsifier, for example, an anionic surfactant such as sodium dodecylbenzene sulfonate or sodium dodecyl sulfate, a nonionic surfactant such as polyoxyethylene nonylphenyl ether or sorbitan monolaurate, or a cationic surfactant such as octadecylamine acetate salt may be used in accordance with a conventional manner. As the polymerization initiator, for example, a peroxide such as t-butylperoxy-2-ethylhexanoate, potassium persulfate, or cumene peroxide, or an azo compound such as 2,2'-azobis (2-methyl-N-(2-hydroxyethyl)-propionamide) or 2,2'-azobis (2-amidinopropane) hydrochloride may be used.

As a polymerization procedure, first, an emulsifier and a monomer that forms a core portion are mixed with water that is a solvent. After that, a polymerization initiator is added thereto, followed by performing emulsion polymerization, whereby a particulate polymer that constitutes a core portion is obtained. Further, by conducting polymerization of the monomer forming the shell portion in the presence of the particulate polymer constituting the core portion, a particulate polymer having a core-shell structure can be obtained.

In this case, from the viewpoint of partially covering the outer surface of the core portion with the shell portion, it is preferable that the monomer for the polymer of the shell portion is supplied to the polymerization system a plurality of times in a divided manner or continuously. By supplying the monomer for the polymer of the shell portion into a polymerization system in a divided manner or in a continuous manner, the polymer constituting the shell portion is formed into particles, and the particles are bonded to the core portion, whereby the shell portion partially covering the core portion can be formed.

In addition, the monomer forming the polymer of the shell portion tends to easily form the shell portion partially covering the core portion when a monomer having a low affinity for the polymerization solvent is used. When the polymerization solvent is water, the monomer forming the polymer of the shell portion preferably includes a hydrophobic monomer, and particularly preferably includes an aromatic vinyl monomer.

If the amount of the emulsifier used is reduced, it tends to be easier to form a shell portion partially covering the core portion, and by appropriately adjusting the amount of the emulsifier, it is possible to form a shell portion partially covering the core portion.

### [1.2. Sulfosuccinic acid ester or its salt]

A sulfosuccinic acid ester is a monoester, diester or triester of sulfosuccinic acid, and is preferably a monoester or diester, and more preferably a diester. The sulfosuccinic acid ester is preferably a mono-, di-, or trialkyl ester, more preferably a monoalkyl ester or a dialkyl ester, and even more preferably a dialkyl ester.

The sulfosuccinic acid ester or a salt thereof is preferably a compound represented by the following formula (i) .

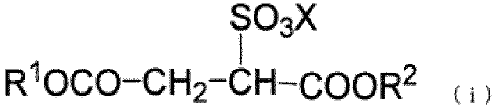

In the formula (i), R¹ and R² are each independently selected from the group consisting of Na, K, Li, NH₄, and an alkyl group of 1 to 12 carbon atoms, and X is selected from the group consisting of Na, K, Li, and NH₄. When R¹ and R² are each an alkyl group, the number of carbon atoms is more preferably 1 to 12, and still more preferably 2 to 10. R¹ and R², when being an alkyl group, may each be a linear alkyl group, may be a branched alkyl group, and may be an alkyl group having an alicyclic structure. Preferable examples of such an alkyl group may include an octyl group, a cyclohexyl group, a cyclopentyl group, and an amyl group. Among these, an octyl group, a cyclohexyl group, a cyclopentyl group, and an amyl group are particularly preferable, while an octyl group and a cyclopentyl group are the most preferable.

In the formula (i), X is preferably selected from the group consisting of Na, Li, and NH₄, more preferably selected from the group consisting of Na and Li. When R¹ and R² each are a moiety other than an alkyl group, they are also preferably selected from the group consisting of Na and Li. When R¹ and R² are a moiety other than an alkyl group, they are usually the same as X.

More specific examples of the compounds represented by the formula (i) may include sodium, potassium and ammonium salts of dioctylsulfosuccinic acid, diamylsulfosuccinic acid and dicyclopentylsulfosuccinic acid.

In the slurry composition of the present invention, the content ratio of the sulfosuccinic acid ester or a salt thereof is usually 0.5 part by weight or more, preferably 1.2 parts by weight or more, and more preferably 1.5 parts by weight or more, and is usually 5 parts by weight or less, preferably 4.5 parts by weight or less, and more preferably 4.0 parts by weight or less, relative to 100 parts by weight of the particulate polymer. When the slurry composition of the present invention contains both a sulfosuccinic acid ester and a salt thereof, such a content ratio may be a ratio of the total of the sulfosuccinic acid ester and the salt thereof relative to the particulate polymer.

When the content ratio of the sulfosuccinic acid ester or the salt thereof is equal to or higher than the aforementioned lower limit value, the particulate polymer can be uniformly dispersed. As a result, a uniform adhesive layer can be formed in the battery. Consequently, non-uniform reaction in the electrode in a low temperature environment can be suppressed, and metal deposition on the negative electrode surface can be suppressed.

When the content ratio of the sulfosuccinic acid ester or the salt thereof is equal to or less than the aforementioned upper limit value, defoaming property of the slurry composition is improved, and foaming at the time of applying the slurry composition onto the substrate is suppressed. Therefore, the slurry composition can be applied onto the substrate at high speed to favorably form an adhesive layer having a small thickness. Further, separation of the slurry composition can be suppressed, and a uniform adhesive layer can be formed on the battery member, so that metal deposition on the negative electrode surface can be suppressed.

### [1.3. Water]

The slurry composition of the present invention includes water. Since the particulate polymer is usually water insoluble, the particulate polymer is dispersed in the form of particles in water.

The slurry composition of the present invention may contain a dispersion medium other than water. Examples of dispersion media that may be used in combination with water may include cyclic aliphatic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone, ε-caprolactone; nitriles such as acetonitrile and propionitrile; ethers such as tetrahydrofuran and ethylene glycol diethyl ether; alcohols such as methanol, ethanol, isopropanol, ethylene glycol, and ethylene glycol monomethyl ether; and amides such as N-methylpyrrolidone (NMP), and N,N-dimethylformamide. As these dispersion media, one type thereof may be solely used, and two or more types thereof may also be used in combination at any ratio. However, it is preferable to use water alone as the dispersion medium.

The amount of the solvent in the slurry composition is preferably set so that the solid concentration of the slurry composition falls within a desired range. The specific solid content concentration of the slurry composition is preferably 10% by weight or more, more preferably 15% by weight or more, and particularly preferably 20% by weight or more, and is preferably 80% by weight or less, more preferably 75% by weight or less, and particularly preferably 70% by weight or less. Herein, the solid content of a composition refers to a substance remaining after drying of the composition.

### [1.4. Optional components that may be contained in slurry composition]

### [1.4.1. Binder polymer]

The slurry composition of the present invention preferably includes a binder polymer. Herein, the binder polymer does not include the particulate polymer.

The binder polymer causes binding of the particulate polymer to enhance the mechanical strength of the adhesive layer. Since the binder polymer has an effect of causing binding of the particulate polymer to the separator substrate or the electrode plate, adhesiveness of the adhesive layer can be further enhanced.

As the binder polymer, a water-insoluble polymer is preferably used. For example, a styrene-butadiene copolymer, a styrene-acrylonitrile copolymer, a (meth)acrylic acid ester polymer, or the like may be used.

Among these, a (meth)acrylic acid ester polymer is preferable as the binder polymer. A (meth)acrylic acid ester polymer refers to a polymer containing a (meth)acrylic acid ester monomer unit. The (meth)acrylic acid ester polymer is preferable because it has high ionic conductivity and can improve the rate property of the secondary battery, and is electrochemically stable and can improve the high-temperature cycle property of the battery.

Examples of the (meth)acrylic acid ester monomer corresponding to the (meth)acrylic acid ester monomer unit may include an acrylic acid alkyl ester such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and a methacrylic acid alkyl ester such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. As these monomers, one type thereof may be solely used, and two or more types thereof may also be used in combination at any ratio. Among these, n-butyl acrylate and 2-ethylhexyl acrylate are preferable from the viewpoint of excellent flexibility.

The ratio of the (meth)acrylic acid ester monomer unit in the binder polymer is preferably 40% by weight or more, more preferably 45% by weight or more, and particularly preferably 50% by weight or more, and is preferably 99% by weight or less, more preferably 98% by weight or less, and particularly preferably 97% by weight or less. By setting the ratio of the (meth)acrylic acid ester monomer unit to be equal to or more than the above-mentioned lower limit value, flexibility of the adhesive layer can be enhanced, and bonding property between the adhesive layer and the separator substrate or the electrode plate can be enhanced. By setting the ratio of the (meth)acrylic acid ester monomer unit to be equal to or less than the aforementioned upper limit value, rigidity of the adhesive layer can be enhanced, and also thereby the bonding property between the adhesive layer and the separator substrate or the electrode plate can be enhanced.

The binder polymer preferably contains an aromatic vinyl monomer unit. Examples of the aromatic vinyl monomer unit may include the same examples as those described in the particulate polymer. Among these, styrene derivative monomer units such as styrene and styrene sulfonic acid are preferable, and a styrene monomer unit is more preferable. As the aromatic vinyl monomer unit, the binder polymer may contain solely one type thereof, and may also contain two or more types thereof in combination at any ratio.

The ratio of the aromatic vinyl monomer unit in the binder polymer is preferably 5% by weight or more, more preferably 10% by weight or more, and particularly preferably 20% by weight or more, and is preferably 60% by weight or less, more preferably 55% by weight or less, and particularly preferably 50% by weight or less.

The binder polymer may also include an acid group-containing monomer unit. Examples of the acid group-containing monomer units may include those selected from a range that are the same as those described as those that may be contained in the particulate polymer. As the acid group-containing monomer unit, the binder polymer may contain solely one type thereof, and may also contain two or more types thereof in combination at any ratio.

The ratio of the acid group-containing monomer unit in the binder polymer is preferably 0.2% by weight or more, more preferably 0.4% by weight or more, and particularly preferably 0.6% by weight or more, and is preferably 10.0% by weight or less, more preferably 6.0% by weight or less, and particularly preferably 4.0% by weight or less. By setting the ratio of the acid group-containing monomer unit to be within the aforementioned range, cohesive fracture of the adhesive layer can be suppressed, and bonding force between the adhesive layer and the adjacent layer in the electrolytic solution can be improved.

The binder polymer may also include a crosslinkable monomer unit. Examples of the crosslinkable monomer corresponding to the crosslinkable monomer unit may include the same examples as those exemplified in the description of the particulate polymer. As the crosslinkable monomers, one type thereof may be solely used, and two or more types thereof may also be used in combination at any ratio.

The ratio of the crosslinkable monomer unit in the binder polymer is preferably 0.2% by weight or more, more preferably 0.6% by weight or more, and particularly preferably 1.0% by weight or more, and is preferably 5.0% by weight or less, more preferably 4.0% by weight or less, and particularly preferably 3.0% by weight or less. By setting the ratio of the crosslinkable monomer unit to be equal to or more than the above-mentioned lower limit value, mechanical strength of the adhesive layer can be enhanced. By setting the ratio to be equal to or less than the upper limit value, flexibility impairment of the adhesive layer can be prevented, and brittleness of the adhesive layer can also be prevented.

The glass transition temperature of the binder polymer is preferably -100°C or higher, more preferably - 90°C or higher, and particularly preferably -80°C or higher, and is preferably 0°C or lower, more preferably -5°C or lower, and particularly preferably -10°C or lower. By setting the glass transition temperature of the binder polymer to be equal to or higher than the lower limit value of the aforementioned range, bonding property between the adhesive layer and the separator substrate or the electrode plate can be enhanced. By setting the glass transition temperature to be equal to or lower than the upper limit value, flexibility of the adhesive layer can be enhanced .

### [1.4.2 Water-soluble polymer]

The slurry composition of the present invention may further include a water-soluble polymer.

Examples of the water-soluble polymer may include a cellulose-based polymer such as carboxymethylcellulose, methylcellulose, hydroxypropylcellulose, and ammonium and alkali metal salts thereof; (modified)poly(meth)acrylic acid and its ammonium salt and alkali metal salt; a polyvinyl alcohol compound such as (modified)polyvinyl alcohol, a copolymer of acrylic acid or an acrylic acid salt and vinyl alcohol, and a copolymer of maleic anhydride or maleic acid or fumaric acid, and vinyl alcohol; and polyethylene glycol, polyethylene oxide, polyvinylpyrrolidone, modified polyacrylic acid, oxidized starch, phosphate starch, casein, and various modified starches. Herein, "(modified)poly" means "non-modified poly" and "modified poly".

The amount of the water-soluble polymer is preferably 0.1 part by weight or more, more preferably 0.2 part by weight or more, and particularly preferably 0.5 part by weight or more, and is preferably 15 parts by weight or less, more preferably 10 parts by weight or less, and particularly preferably 5 parts by weight or less, relative to 100 parts by weight of the particulate polymer.

### [2. Method for producing slurry composition of the present invention]

The method for producing the slurry composition is not particularly limited. Usually, a slurry composition is obtained by mixing the above-mentioned components.

The order of mixing the components is not particularly limited. The mixing method is also not particularly limited. Usually, in order to rapidly disperse the particles, mixing is performed using a disperser as a mixing device.

The disperser is preferably an apparatus capable of uniformly dispersing and mixing the above-described components. Examples thereof may include a ball mill, a sand mill, a pigment disperser, a crusher, an ultrasonic disperser, a homogenizer, and a planetary mixer. Among these, a high-performance dispersion device such as a bead mill, a roll mill, or a Filmix is particularly preferable because high dispersion shear can be applied.

### [3. Adhesive layer for non-aqueous secondary battery]

The adhesive layer for a non-aqueous secondary battery of the present invention contains the particulate polymer described above and 0.5 part by weight or more and 5 parts by weight or less of a sulfosuccinic acid ester or a salt thereof relative to 100 parts by weight of the particulate polymer. As a result, metal deposition on the negative electrode surface can be suppressed, and the battery members such as the electrode plate and the separator substrate can favorably be bonded to each other.

Since the adhesive layer for a non-aqueous secondary battery of the present invention has favorable adhesiveness, it can be made relatively thin.

The thickness of the adhesive layer for a non-aqueous secondary battery of the present invention is preferably 0.2 µm or more, and more preferably 0.3 µm or more, and is preferably 3 µm or less, and more preferably 2.5 µm or less.

By forming a film of the slurry composition using the slurry composition of the present invention and drying the film, an adhesive layer for a non-aqueous secondary battery can be produced as a film formed by the solid content of the slurry composition.

Formation of the film of the slurry composition may be accomplished, for example, by applying the slurry composition onto a suitable substrate.

The substrate is a member which is an object for forming the film of the slurry composition. There is no limitation imposed on the substrate. For example, an adhesive layer may be obtained by forming a film of the slurry composition on the surface of a release film, removing the solvent from the film to form an adhesive layer, and peeling the adhesive layer from the release film. However, from the viewpoint of increasing the production efficiency by omitting the step of peeling the adhesive layer, a component of the battery is usually used as the substrate. Examples of such a component of the battery may include a separator substrate, and an electrode plate.

Examples of the application method may include a doctor blade method, a dipping method, a reverse roll method, a direct roll method, a gravure method, an extrusion method, and a brush coating method. Among these, a dipping method and a gravure method are preferable from the viewpoint of obtaining a uniform film.

Examples of the drying method may include drying by air such as warm air, hot air, low humidity air, and the like; vacuum drying; and a drying method by irradiation with infrared rays, far infrared rays, electron rays, and the like.

The temperature at the time of drying is preferably 40°C or higher, more preferably 45°C or higher, and particularly preferably 50°C or higher, and is preferably 90°C or lower, more preferably 80°C or lower, and particularly preferably 70°C or lower. By setting the drying temperature to be equal to or higher than the lower limit of the aforementioned range, it is possible to efficiently remove the dispersion medium and the low molecular compounds from the slurry composition. By setting the drying temperature to be equal to or lower than the upper limit, deformation of the substrate due to heat can be suppressed.

The dry time is preferably 5 seconds or more, more preferably 10 seconds or more, and particularly preferably 15 seconds or more, and is preferably 3 minutes or less, more preferably 2 minutes or less, and particularly preferably 1 minute or less. By setting the drying time to be equal to or more than the lower limit of the aforementioned range, the dispersion medium can be sufficiently removed from the slurry composition, so that the output property of the battery can be improved. By setting the drying time to be equal to or less than the upper limit value, production efficiency can be enhanced.

In the method for producing the adhesive layer, an optional step other than those described above may be performed.

### [4. Non-aqueous secondary battery of the present invention]

The non-aqueous secondary battery of the present invention includes a positive electrode, a negative electrode, a separator, and an electrolytic solution, and one or more selected from the group consisting of the positive electrode, the negative electrode, and the separator includes the adhesive layer for a non-aqueous secondary battery of the present invention described above.

In the non-aqueous secondary battery of the present invention, since one or more selected from the group consisting of the positive electrode, the negative electrode, and the separator includes the adhesive layer for a non-aqueous secondary battery of the present invention described above, the positive electrode and the separator, or the negative electrode and the separator are favorably bonded to each other, and metal deposition on the negative electrode surface is suppressed.

### [4.1. First embodiment: an embodiment in which the separator includes an adhesive layer for a non-aqueous secondary battery]

In an embodiment of the non-aqueous secondary battery of the present invention, the separator includes the adhesive layer for a non-aqueous secondary battery of the present invention. In the present embodiment, the adhesive layer for a non-aqueous secondary battery of the present invention is provided on a separator substrate. The adhesive layer for a non-aqueous secondary battery may be provided on only one surface of the separator substrate. Alternatively, the adhesive layer may be provided on both surfaces.

As the separator substrate, for example, a porous substrate having fine pores may be used. By using such a separator substrate, it is possible to prevent short circuit in the secondary battery without hindering charging and discharging of the battery. Specific examples of the separator substrate may include a microporous membrane and a nonwoven fabric that contain a polyolefin resin such as a polyethylene resin or a polypropylene resin, an aromatic polyamide resin or the like.

The thickness of the separator substrate is preferably 0.5 µm or more, and more preferably 1 µm or more, and is preferably 40 µm or less, and more preferably 30 µm or less. Within this range, increase in internal resistance due to the separator substrate in the secondary battery becomes small, and the workability at the time of producing the battery is excellent.

### [4.2. Second embodiment: an embodiment in which the electrode includes the adhesive layer for a non-aqueous secondary battery]

In another embodiment of the non-aqueous secondary battery of the present invention, the electrode includes the adhesive layer for a non-aqueous secondary battery of the present invention. The electrode includes an electrode plate. The electrode plate usually includes a current collector and an electrode active material layer.

### [4.2.1. Current collector]

As the current collector, a material that is electrically conductive and electrochemically durable may be adopted. Usually, a metal material is used as the material for the current collector. Examples thereof may include iron, copper, aluminum, nickel, stainless steel, titanium, tantalum, gold, and platinum. Among these, aluminum is preferable as the current collector used for the positive electrode, and copper is preferable as the current collector used for the negative electrode. As these materials, one type thereof may be solely used, and two or more types thereof may also be used in combination at any ratio.

### [4.2.2. Electrode active material layer]

The electrode active material layer is a layer provided over the current collector and includes an electrode active material.

As the electrode active material, a material in accordance with the type of the non-aqueous secondary battery may be used. For example, in the case of a lithium ion secondary battery, a material capable of reversibly intercalating or releasing lithium ions by applying an electric potential in an electrolytic solution may be used.

Specific examples of the positive electrode active material may include a positive electrode active material composed of an inorganic compound, a positive electrode active material composed of an organic compound, and a composite material in which these materials are combined. Examples of the inorganic compound used for the positive electrode active material may include a transition metal oxide, a complex oxide of lithium and transition metal, and a transition metal sulfide. As the above-mentioned transition metal, for example, Fe, Co, Ni, Mn, or the like is used. Specific examples of the inorganic compound used for the positive electrode active material may include a lithium-containing complex metal oxide such as LiCoO₂, LiNiO₂, LiMnO₂, LiMn₂O₄, LiFePO₄, and LiFeVO₄; a transition metal sulfide such as TiS₂, TiS₃, and amorphous MoS₂; and a transition metal oxide such as Cu₂V₂O₃, amorphous V₂O-P₂O₅, MoO₃, V₂O₅, and V₆O₁₃. Examples of the organic compound used for the positive electrode active material may include an electroconductive polymer such as polyacetylene and poly-p-phenylene.

As these positive electrode active materials, one type thereof may be solely used, and two or more types thereof may also be used in combination at any ratio. Alternatively, a mixture of the inorganic compound and the organic compound may be used as the positive electrode active material.

Examples of the negative electrode active material may include a carbonaceous material such as amorphous carbon, graphite, natural graphite, mesocarbon microbeads, and pitch-based carbon fibers; and an electroconductive polymer such as polyacene. Metals such as silicon, tin, zinc, manganese, iron and nickel, and alloys thereof; oxides of the metals or alloys; and sulfates of the metals or alloys may also be exemplified. Alternatively, metallic lithium; lithium alloys such as Li-Al, Li-Bi-Cd, and Li-Sn-Cd; a lithium-transition metal nitride; and silicon may be used. Further, as the electrode active material, a material in which an electroconductive material is attached to the surface thereof by a mechanical modification method may be used. As these negative electrode active materials, one type thereof may be solely used, and two or more types thereof may also be used in combination at any ratio.

### [4.2.3. Adhesive layer contained in electrode]

In the electrode of the non-aqueous secondary battery of the present embodiment, the adhesive layer for a non-aqueous secondary battery of the present invention is provided on the electrode plate described above. The adhesive layer for a non-aqueous secondary battery may be provided on only one surface of the electrode plate, or may be provided on both surfaces. However, since the adhesive layer is usually provided on the electrode active material layer, the electrode of the non-aqueous secondary battery of the present embodiment includes the current collector, the electrode active material layer, and the adhesive layer in this order.

### [4.3. Electrolytic solution]

As the electrolytic solution, an organic electrolytic solution containing an organic solvent and a support electrolyte dissolved in the organic solvent may be preferably used.

As the organic solvent used for the electrolytic solution, a solvent capable of dissolving the support electrolyte may be used. Examples of the organic solvent may include a carbonate compound such as dimethyl carbonate (DMC), ethylene carbonate (EC), diethyl carbonate (DEC), propylene carbonate (PC), butylene carbonate (BC), methyl ethyl carbonate (MEC), and vinylene carbonate (VC); an ester compound such as γ-butyrolactone and methyl formate; an ether compound such as 1,2-dimethoxyethane and tetrahydrofuran; and a sulfur-containing compound such as sulfolane and dimethyl sulfoxide.

As the support electrolyte, a support electrolyte in accordance with the type of the non-aqueous secondary battery may be used.

In the case of a lithium ion secondary battery, for example, a lithium salt is used. Examples of the lithium salt may include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₃SO₂) NLi. Among these, LiPF₆, LiClO₄, and CF₃SO₃Li are preferable because they are easily soluble in a solvent and exhibit a high degree of dissociation.

### [4.4. Method for producing non-aqueous secondary battery]

The method for producing the non-aqueous secondary battery according to the present invention is not particularly limited. For example, a positive electrode and a negative electrode may be stacked with a separator therebetween. The stacked body may be wound, folded, or the like in conformity with a battery shape, and placed in a battery container. Then, an electrolytic solution may be injected into the battery container, and the battery container may be sealed. Furthermore, expanded metal, an overcurrent prevention element such as a fuse and a PTC element, a lead plate, and the like may be placed in the battery container if necessary to prevent the pressure increase inside the battery and the overcharging and overdischarging. The shape of the battery may be, for example, any of a laminate cell type, a coin type, a button type, a sheet type, a cylindrical type, a rectangle, and a flat type.

### Examples

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The following operations were performed at normal temperature and under normal pressure, unless otherwise specified.

### [Evaluation method]

### (Method for measuring swelling degree of particulate polymer (core-shell structure body))

An aqueous dispersion liquid containing the particulate polymer produced in each of Examples and Comparative Examples was placed in a petri dish made of polytetrafluoroethylene, and dried under the condition of 25°C and 48 hours to prepare a film having a thickness of 0.5 mm.

This film was cut into a 1 cm square to obtain a test piece. The weight W0 of this test piece was measured.

The test piece was immersed in an electrolytic solution at 60°C for 72 hours. After that, the test piece was taken out of the electrolytic solution, and the electrolytic solution on the surface of the test piece was wiped off. Then, the weight W1 of the test piece after the immersion test was measured. The used electrolytic solution was a solution in which LiPF₆ as a support electrolyte was dissolved in a mixed solvent of ethylene carbonate, diethyl carbonate, and vinylene carbonate (volume mixing ratio: ethylene carbonate / diethyl carbonate / vinylene carbonate = 68.5/30/1.5; SP value: 12.7 (cal/cm³)^{1/2}) at a concentration of 1 mol/L relative to the solvent.

With these weights W0 and W1, the swelling degree S (times) was calculated as S = W1/W0.

### (Evaluation of defoaming property)

The defoaming property was evaluated in accordance with Ross-Miles Test Method of JIS K3362. On 50 ml of the obtained slurry composition, 200 ml of the composition was allowed to fall dropwise from a height of 900 mm over 30 seconds in an environment of 25°C. The height of foam at 15 seconds after the completion of the dropping was measured. The measurement was repeated three times for each sample, and an arithmetic average of three measurements was evaluated in accordance with the following criteria. Lower height of foam is indicative of better defoaming property.
A: less than 4 mm
B: 4 mm or more and less than 10 mm
C: 10 mm or more and less than 30 mm
D: 30 mm or more

### (Evaluation of low temperature acceptance property: evaluation of suppression of lithium deposition on negative electrode surface)

The prepared lithium ion secondary battery was left to stand in an environment of 25°C for 24 hours, and thereafter charging of the battery was performed in an environment of -15°C at 4.2 V and 1C for 1 hour. Subsequently, the negative electrode was taken out in a room temperature argon environment. Then, the ratio (%) of an area where lithium metal was deposited relative to the entire area of the negative electrode was measured, and evaluated in accordance with the following criteria. Smaller ratio of the area where lithium metal was deposited is indicative of higher degree of suppression of lithium deposition on a negative electrode surface, and better low temperature acceptance property.
A: Area ratio is 0% or more and less than 10%.
B: Area ratio is 10% or more and less than 20%.
C: Area ratio is 20% or more and less than 30%.
D: Area ratio is equal to or more than 30%.

### (Evaluation of dry adhesive strength)

The positive electrode, negative electrode, and separator prepared in each of Examples and Comparative Examples were each cut out into a width of 10 mm and a width of length 50 mm. The cut-out positive electrode and separator were stacked, and the cut-out negative electrode and separator were stacked. Each of the stacked body was pressed by roll press with a load of 10 kN/m at 30 m/min at a temperature of 25°C to obtain a test piece.

A cellophane tape was attached onto the electrode surface of this test piece. The used cellophane tape was the one defined in JIS Z1522. The test piece was placed on a horizontal test table with the current collector-side surface of the electrode (the positive electrode or the negative electrode) facing downward, and the cellophane tape was fixed to the test table.

Then, one end of the separator substrate was pulled vertically upward at a pulling speed of 50 mm/min. The stress when it was peeled was measured.

This measurement was performed three times for each of the stacked body including the positive electrode and separator and the stacked body including the negative electrode and separator. Thus, the measurement was performed six times in total. An average value of the stress was calculated as peel strength, and the adhesive strength between the electrode and the separator was evaluated in accordance with the following criteria.

Higher peel strength is indicative of higher adhesiveness of the adhesive layer.
A: Peel strength is 3 N/m or more.
B: Peel strength is 1 N/m or more and less than 3 N/m.
D: Peel strength is less than 1 N/m.

### (Wet adhesiveness)

The positive electrode, negative electrode, and separator prepared in each of Examples and Comparative Examples were each cut out into a width of 10 mm and a width of length 50 mm. The cut-out positive electrode and separator were stacked, and the cut-out negative electrode and separator were stacked. Each of the stacked body was placed into an aluminum laminate package together with an electrolytic solution, and the package was sealed. The stacked body was pressed by roll press with a load of 10 kN/m at 30 m/min at a temperature of 60°C, and the package was disassembled to obtain a test piece. The used electrolytic solution was the one obtained by dissolving LiPF₆ as a support electrolyte in a mixed solvent of ethylene carbonate (EC) and diethyl carbonate (DEC) (volume mixing ratio EC/DEC = 1/2; SP value: 12.8 (cal/cm³)^{1/2}) at a concentration of 1 mol/L relative to the solvent.

After that, the test piece was taken out, and the electrolytic solution attached to the surface was wiped off. Then, a cellophane tape was attached onto the electrode surface of the test piece. The used cellophane tape was the one defined in JIS Z1522. The test piece was placed on a horizontal test table with the current collector-side surface of the electrode (the positive electrode or the negative electrode) facing downward, and the cellophane tape was fixed to the test table.

After that, one end of the separator substrate was pulled vertically upward at a pulling speed of 50 mm/min. The stress when it was peeled was measured. This measurement was performed three times for each of the stacked body including the positive electrode and separator and the stacked body including the negative electrode and separator. Thus, the measurement was performed six times in total. An average value of the stress was calculated, and the average value was adopted as peel strength. Higher peel strength is indicative of better adhesiveness of the adhesive layer in the electrolytic solution.
A: Peel strength is 5.0 N/m or more.
B: Peel strength is 3.0 N/m or more and less than 5.0 N/m.
C: Peel strength is 0.5 N/m or more and less than 3.0 N/m.
D: Peel strength is less than 0.5 N/m.

### [Example 1]

### (1-1. Production of particulate polymer (core-shell structure body))

Into a 5 MPa pressure resistant container equipped with a stirrer, 40 parts of methyl methacrylate, 33 parts of butyl acrylate, 26 parts of acrylonitrile, and 1 part of allyl methacrylate, as a monomer composition used for the production of a core portion; 1 part of sodium dodecylbenzenesulfonate as an emulsifier; 150 parts of ion exchanged water; and 0.5 part of potassium persulfate as a polymerization initiator were charged. The mixture was sufficiently stirred, and thereafter warmed to 60°C to initiate polymerization. The polymerization was continued until the polymerization conversion ratio reached 96%. Accordingly, there was obtained an aqueous dispersion liquid containing a particle-shape polymer constituting the core portion.

Subsequently, this aqueous dispersion liquid was warmed to 70°C. To the aqueous dispersion liquid, 99 parts of styrene and 1 part of methacrylic acid, as a monomer composition used for the production of a shell portion, were continuously fed over 30 minutes to continue polymerization. When the polymerization conversion ratio reached 96%, the product was cooled to terminate the reaction. Thus, an aqueous dispersion liquid containing a particulate polymer was produced. The swelling degree of the particulate polymer in this aqueous dispersion liquid was measured by the aforementioned method. It was confirmed that the particulate polymer produced by this procedure was a core-shell structure body in which a shell portion partly covers the outer surface of a core portion.

### (1-2. Production of binder polymer)

Into a reaction vessel equipped with a stirrer, 70 parts of ion exchanged water, 0.15 part of sodium lauryl sulfate (manufactured by Kao Chemical, product name "EMAL 2F") as an emulsifier, and 0.5 part of ammonium persulfate were fed. The gas phase was substituted with nitrogen gas, and the temperature was increased to 60°C.

In another container, 50 parts of ion exchanged water; 0.5 part of sodium dodecylbenzenesulfonate as a dispersant; and 65 parts of 2-ethylhexyl acrylate, 30 parts of styrene, 4 parts of acrylic acid, and 1.0 part of allyl methacrylate, as polymerizable monomers were mixed to obtain a monomer mixture. This monomer mixture was continuously added into the reaction vessel over 4 hours for polymerization. During addition of the monomer mixture, the reaction was performed at 60°C. After the addition ended, the resultant product was further stirred at 70°C for 3 hours. Then, the reaction terminated. Thus, an aqueous dispersion liquid containing a binder polymer was produced.

### (1-3. Production of slurry composition for an adhesive layer of a non-aqueous secondary battery)

As a water-soluble polymer, carboxymethylcellulose (manufactured by Daicel FineChem Ltd., product name "D1200") having an etherification degree of 0.8 to 1.0 was prepared. The viscosity of a 1% aqueous solution of this water-soluble polymer was 10 mPa·s to 20 mPa·s.

100 parts in terms of solid content of the aqueous dispersion liquid containing the particulate polymer and 1.5 parts of the water-soluble polymer were mixed. Furthermore, ion exchanged water was mixed such that the solid content concentration became 40% by weight. Thus, the particulate polymer was dispersed. To the obtained dispersion, 22 parts in terms of solid content of the aqueous dispersion liquid containing the binder polymer, 1.85 parts of sodium dioctyl sulfosuccinate, and 0.2 part of a polyethylene glycol-type surfactant (manufactured by San Nopco Limited, product name "SN Wet 366") as a leveling agent were mixed. Thus, a slurry composition for an adhesive layer of a non-aqueous secondary battery in a form of a slurry was produced.

### (1-4. Production of separator)

A polyethylene organic porous substrate (thickness: 16 µm, Gurley value: 210 s/100cc) was prepared as a separator substrate. The aforementioned slurry composition for an adhesive layer of a non-aqueous secondary battery was applied onto both surfaces of the prepared separator substrate, and dried at 50°C for 1 minute. Accordingly, there was obtained a separator having on both surfaces thereof adhesive layers each of which has a thickness of 2 µm.

The peel strength of this separator was measured by the aforementioned method.

### (1-5. Production of particulate binder for negative electrode)

Into a 5 MPa pressure resistant container equipped with a stirrer, 33.5 parts of 1,3-butadiene, 3.5 parts of itaconic acid, 62 parts of styrene, 1 part of 2-hydroxyethyl acrylate, 0.4 part of sodium dodecylbenzenesulfonate as an emulsifier, 150 parts of ion exchanged water, and 0.5 part of potassium persulfate as a polymerization initiator were charged. The mixture was sufficiently stirred, and warmed to 50°C to initiate polymerization. When the polymerization conversion ratio reached 96%, the product was cooled to terminate the reaction. Thus, a mixture containing a particulate binder (SBR) was obtained. To the mixture containing the particulate binder, a 5% aqueous sodium hydroxide solution was added to adjust the pH to 8. After that, unreacted monomers were removed from the aforementioned mixture by heat vacuum distillation. The residue was cooled to 30°C or lower to obtain a desired aqueous dispersion liquid containing a particulate binder.

### (1-6. Production of slurry for negative electrode)

100 parts of artificial graphite (volume-average particle diameter: 15.6 µm) and 1 part in terms of solid content of a 2% aqueous solution of sodium carboxymethyl cellulose salt ("MAC350HC" manufactured by Nippon Paper Industries Co., Ltd.) as a thickener were mixed. Ion exchanged water was further added to prepare the solid content concentration to 68%. The resultant product was mixed at 25°C for 60 minutes. Into the mixture liquid obtained in this manner, ion exchanged water was added to prepare the solid content concentration to 62%. After that, the product was further mixed at 25°C for 15 minutes. Into this mixture liquid, 1.5 parts in terms of solid content of the aqueous dispersion liquid containing the particulate binder was added. Then, ion exchanged water was added to adjust the final solid content concentration to 52%. The obtained product was further mixed for 10 minutes. The resultant was subjected to a defoaming treatment under reduced pressure to obtain a slurry for a negative electrode having favorable fluidity.

### (1-7. Production of negative electrode)

The aforementioned slurry for a negative electrode was applied onto a copper foil having a thickness of 20 µm as a current collector using a comma coater such that the film thickness after drying became about 150 µm. Then, the slurry was dried. This drying was performed by delivering the copper foil at a speed of 0.5 m/min in an oven at 60°C over 2 minutes. After that, heat treatment was performed at 120°C for 2 minutes to obtain a primary negative electrode before press. This primary negative electrode before press was rolled by roll press to obtain a negative electrode after press including a negative electrode active material layer having a thickness of 80 µm.

### (1-8. Production of slurry for positive electrode)

100 parts of LiCoO₂ having a volume-average particle diameter of 12 µm as a positive electrode active material, 2 parts of acetylene black (manufactured by Denki Kagaku Kogyo Kabushiki Kaisha, product name "HS-100") as an electroconductive material, and 2 parts in terms of solid content of polyvinylidene fluoride (manufactured by Kureha Corporation, product name "#7208") as a binder for a positive electrode were mixed. To the mixture, N-methylpyrrolidone was added to adjust the total solid content concentration to 70%. The obtained product was mixed by a planetary mixer to obtain a slurry for a positive electrode.

### (1-9. Production of positive electrode)

The aforementioned slurry for a positive electrode was applied onto an aluminum foil having a thickness of 20 µm as a current collector using a comma coater, such that the film thickness after drying became about 150 µm. Then, the slurry was dried. This drying was performed by delivering the aluminum foil at a speed of 0.5 m/min in an oven at 60°C over 2 minutes. After that, heat treatment was performed at 120°C for 2 minutes to obtain a primary positive electrode before press. This primary positive electrode before press was rolled by roll press to obtain a positive electrode.

### (1-10. Production of lithium ion secondary battery)

The positive electrode after press was cut out into 49 × 5 cm². The separator which had been cut out into 55 × 5.5 cm² was disposed on the positive electrode active material layer of the cut-out positive electrode. Furthermore, the negative electrode after press was cut out into a rectangle of 50 × 5.2 cm². This cut-out negative electrode was disposed on a surface of the separator that is opposite the positive electrode such that the surface on the side of the negative electrode active material layer faces the separator. The obtained body was wound by a winder to obtain a wound body. This wound body was pressed at 60°C with 0.5 MPa to form a flat body. This flat body was wrapped with an aluminum package sheath as a sheath of a battery. Into the sheath, an electrolytic solution (solvent: EC/DEC/VC = 68.5/30/1.5 in volume ratio, electrolyte: LiPF₆ at a concentration of 1 M) was injected in such a manner as to completely eliminate air. Furthermore, the opening of the aluminum package was heat sealed at 150°C to seal to close the opening of the aluminum sheath. Accordingly, a 800 mAh wound-type lithium ion secondary battery was produced.

The lithium ion secondary battery obtained in this manner was evaluated for suppression of metal deposition on a negative electrode by the aforementioned method.

### [Example 2]

A slurry composition for an adhesive layer of a non-aqueous secondary battery was obtained, and a lithium ion secondary battery was further obtained, by the same manner as that of Example 1 except that the amount of butyl acrylate was 33.7 parts, and the amount of allyl methacrylate was 0.3 part in the production of the particulate polymer (core-shell structure body) according to the aforementioned 1-1. The obtained lithium ion secondary battery was evaluated for suppression of metal deposition on a negative electrode by the aforementioned method.

### [Example 3]

A slurry composition for an adhesive layer of a non-aqueous secondary battery was obtained, and a lithium ion secondary battery was further obtained, by the same manner as that of Example 1 except that the amount of butyl acrylate was 33.5 parts, and the amount of allyl methacrylate was 0.5 part in the production of the particulate polymer (core-shell structure body) according to the aforementioned 1-1. The obtained lithium ion secondary battery was evaluated for suppression of metal deposition on a negative electrode by the aforementioned method.

### [Example 4]

A slurry composition for an adhesive layer of a non-aqueous secondary battery was obtained, and a lithium ion secondary battery was further obtained, by the same manner as that of Example 1 except that the amount of sodium dioctyl sulfosuccinate was 0.5 part in the production of the slurry composition for an adhesive layer of a non-aqueous secondary battery according to the aforementioned 1-3. The obtained lithium ion secondary battery was evaluated for suppression of metal deposition on a negative electrode by the aforementioned method.

### [Example 5]

A slurry composition for an adhesive layer of a non-aqueous secondary battery was obtained, and a lithium ion secondary battery was further obtained, by the same manner as that of Example 1 except that the amount of sodium dioctyl sulfosuccinate was 1.3 parts in the production of the slurry composition for an adhesive layer of a non-aqueous secondary battery according to the aforementioned 1-3. The obtained lithium ion secondary battery was evaluated for suppression of metal deposition on a negative electrode by the aforementioned method.

### [Example 6]

A slurry composition for an adhesive layer of a non-aqueous secondary battery was obtained, and a lithium ion secondary battery was further obtained, by the same manner as that of Example 1 except that the amount of sodium dioctyl sulfosuccinate was 5 parts in the production of the slurry composition for an adhesive layer of a non-aqueous secondary battery according to the aforementioned 1-3. The obtained lithium ion secondary battery was evaluated for suppression of metal deposition on a negative electrode by the aforementioned method.

### [Example 7]

A slurry composition for an adhesive layer of a non-aqueous secondary battery was obtained, and a lithium ion secondary battery was further obtained, by the same manner as that of Example 1 except that 1.85 parts of dicyclopentyl sulfosuccinic acid was used instead of sodium dioctyl sulfosuccinate in the production of the slurry composition for an adhesive layer of a non-aqueous secondary battery according to the aforementioned 1-3. The obtained lithium ion secondary battery was evaluated for suppression of metal deposition on a negative electrode by the aforementioned method.

### [Comparative Example 1]

Into a 5 MPa pressure resistant container equipped with a stirrer, 0.4 part of methacrylic acid, 24 parts of methyl methacrylate, 19.8 parts of butyl acrylate, 15.6 parts of acrylonitrile, 0.6 part of allyl methacrylate, and 39.6 parts of styrene as a monomer composition; 1 part of sodium dodecylbenzenesulfonate as an emulsifier; 150 parts of ion exchanged water; and 0.5 part of potassium persulfate as a polymerization initiator were charged. The mixture was sufficiently stirred, and thereafter warmed to 60°C to initiate polymerization. The polymerization was continued until the polymerization conversion ratio reached 96%. Accordingly, an aqueous dispersion liquid containing a particulate polymer was obtained. The obtained particulate polymer is referred to as a core-portion polymer.

The obtained aqueous dispersion liquid containing the core-portion polymer was used in place of the particulate polymer to measure the swelling degree by the aforementioned method.

Further, a slurry composition for an adhesive layer of a non-aqueous secondary battery was obtained, and a lithium ion secondary battery was further obtained, by the same manner as that of Example 1 except that the aforementioned aqueous dispersion liquid containing the core-portion polymer was used in place of the aqueous dispersion liquid containing the particulate polymer in the production of the slurry composition for an adhesive layer of a non-aqueous secondary battery according to the aforementioned 1-3. The obtained lithium ion secondary battery was evaluated for suppression of metal deposition on a negative electrode by the aforementioned method.

### [Comparative Example 2]

A slurry composition for an adhesive layer of a non-aqueous secondary battery was obtained, and a lithium ion secondary battery was further obtained, by the same manner as that of Example 1 except that the amount of sodium dioctyl sulfosuccinate was 7 parts in the production of the slurry composition for an adhesive layer of a non-aqueous secondary battery according to the aforementioned 1-3. The obtained lithium ion secondary battery was evaluated for suppression of metal deposition on a negative electrode by the aforementioned method.

### [Comparative Example 3]

A slurry composition for an adhesive layer of a non-aqueous secondary battery was obtained, and a lithium ion secondary battery was further obtained, by the same manner as that of Example 1 except that sodium dioctyl sulfosuccinate was not used in the production of the slurry composition for an adhesive layer of a non-aqueous secondary battery according to the aforementioned 1-3. The obtained lithium ion secondary battery was evaluated for suppression of metal deposition on a negative electrode by the aforementioned method.

The evaluation results are shown in the following tables.

The abbreviations in the tables mean as follows.
MMA: methyl methacrylate
BA: butyl acrylate
AN: acrylonitrile
AMA: allyl methacrylate
ST: styrene
MAA: methacrylic acid
2-EHA: 2-ethylhexyl acrylate
AA: acrylic acid

**Table 1**

| | | Ex. 1 | Ex. 2 | Ex. 3 |
|---|---|---|---|---|
| Particulate polymer | Core portion polymer composition ratio (wt%) | MMA 40 | MMA 40 | MMA 40 |
| | | BA 33 | BA 33.7 | BA 33.5 |
| | | AN 26 | AN 26 | AN 26 |
| | | AMA 1 | AMA 0.3 | AMA 0.5 |
| | Shell portion polymer composition ratio (wt%) | ST 99 | ST 99 | ST 99 |
| | | MAA 1 | MAA 1 | MAA 1 |
| | Blend amount (parts by weight) | 100 | 100 | 100 |
| | Swelling degree | 1.5 | 4 | 2.5 |
| Binder polymer | Composition ratio (wt%) | 2-EHA 65 | 2-EHA 65 | 2-EHA 65 |
| | | ST 30 | ST 30 | ST 30 |
| | | AA 4 | AA 4 | AA 4 |
| | | AMA 1.0 | AMA 1.0 | AMA 1.0 |
| | Blend amount (parts by weight) | 22 | 22 | 22 |
| Sodium sulfosuccinate | Blend amount (parts by weight) | 1.85 | 1.85 | 1.85 |
| Li deposition suppression | | A | A | A |
| Dry adhesive strength | | A | A | A |
| Wet adhesive strength | | A | C | B |
| Defoaming property | | A | A | A |

**Table 2**

| | | Ex. 4 | Ex. 5 | Ex. 6 | Ex. 7 |
|---|---|---|---|---|---|
| Particulate polymer | Core portion polymer composition ratio (wt%) | MMA 40 | MMA 40 | MMA 40 | MMA 40 |
| | | BA 33 | BA 33 | BA 33 | BA 33 |
| | | AN 26 | AN 26 | AN 26 | AN 26 |
| | | AMA 1 | AMA 1 | AMA 1 | AMA 1 |
| | Shell portion polymer composition ratio (wt%) | ST 99 | ST 99 | ST 99 | ST 99 |
| | | MAA 1 | MAA 1 | MAA 1 | MAA 1 |
| | Blend amount (parts by weight) | 100 | 100 | 100 | 100 |
| | Swelling degree | 1.5 | 1.5 | 1.5 | 1.5 |
| Binder polymer | Composition ratio (wt%) | 2-EHA 65 | 2-EHA 65 | 2-EHA 65 | 2-EHA 65 |
| | | ST 30 | ST 30 | ST 30 | ST 30 |
| | | AA 4 | AA 4 | AA 4 | AA 4 |
| | | AMA 1.0 | AMA 1.0 | AMA 1.0 | AMA 1.0 |
| | Blend amount (parts by weight) | 22 | 22 | 22 | 22 |
| Sodium sulfosuccinate | Blend amount (parts by weight) | 0.5 | 1.3 | 5 | 1.85 |
| Li deposition suppression | | C | B | A | B |
| Dry adhesive strength | | A | A | A | B |
| Wet adhesive strength | | A | A | A | A |
| Defoaming property | | A | A | C | A |

**Table 3**

| | | Comp. Ex. 1 | Comp. Ex. 2 | Comp. Ex. 3 |
|---|---|---|---|---|
| Particulate polymer | Core | MAA 0.4 | MMA 40 | MMA 40 |
| | portion | MMA 24 | BA 33 | BA 33 |
| | polymer | BA 19.8 | AN 26 | AN 26 |
| | composition | AN 15.6 | AMA 1 | AMA 1 |
| | ratio (wt%) | AMA 0.6 | | |
| | | ST 39.6 | | |
| | Shell portion polymer composition ratio (wt%) | None | ST 99 | ST 99 |
| | | | MAA 1 | MAA 1 |
| | Blend amount (parts by weight) | 100 | 100 | 100 |
| | Swelling degree | 3 | 1.5 | 1.5 |
| Binder polymer | Composition | 2-EHA 65 | 2-EHA 65 | 2-EHA 65 |
| | ratio (wt%) | ST 30 | ST 30 | ST 30 |
| | | AA 4 | AA 4 | AA 4 |
| | | AMA 1.0 | AMA 1.0 | AMA 1.0 |
| | Blend amount (parts by weight) | 22 | 22 | 22 |
| Sodium sulfosuccinate | Blend amount (parts by weight) | 1.85 | 7 | 0 |
| Li deposition suppression | | A | B | D |
| Dry adhesive strength | | C | B | B |
| Wet adhesive strength | | C | B | B |
| Defoaming property | | A | D | A |

As understood from the aforementioned results, the slurry composition for an adhesive layer of a non-aqueous secondary battery according to each of Examples has a favorable defoaming property, and an adhesive layer formed with the slurry composition has favorable adhesiveness. Furthermore, the slurry composition can suppress lithium deposition on a negative electrode surface. On the other hand, it is understood that the slurry composition for an adhesive layer of a non-aqueous secondary battery according to each of Comparative Examples cannot achieve, in a balanced manner, a favorable defoaming property, formation of an adhesive layer having favorable adhesiveness, and suppression of lithium deposition.

### Reference Sign List

- 100: particulate polymer
- 110: core portion
- 110S: outer surface of core portion
- 120: shell portion

## Claims

1. A slurry composition for an adhesive layer of a non-aqueous secondary battery comprising a particulate polymer, a sulfosuccinic acid ester or a salt thereof, and water, wherein
the particulate polymer is a core-shell structure body which has a core portion and a shell portion covering at least a portion of an outer surface of the core portion, and
a content ratio of the sulfosuccinic acid ester or the salt thereof is 0.5 part by weight or more, and 5 parts by weight or less relative to 100 parts by weight of the particulate polymer.

2. The slurry composition for an adhesive layer of a non-aqueous secondary battery according to claim 1, wherein a swelling degree of the particulate polymer to the electrolytic solution is more than 1 time and 4 times or less.

3. The slurry composition for an adhesive layer of a non-aqueous secondary battery according to claim 1 or 2, wherein the shell portion covers a part of the outer surface of the core portion.

4. A method for producing an adhesive layer for a non-aqueous secondary battery, comprising: forming a film of a slurry composition for an adhesive layer of a non-aqueous secondary battery using the slurry composition for an adhesive layer of a non-aqueous secondary battery according to any one of claims 1 to 3, and drying the film to obtain an adhesive layer for a non-aqueous secondary battery.

5. An adhesive layer for a non-aqueous secondary battery formed by using the slurry composition for an adhesive layer of a non-aqueous secondary battery according to any one of claims 1 to 3.

6. An adhesive layer for a non-aqueous secondary battery comprising a particulate polymer, and a sulfosuccinic acid ester or a salt thereof, wherein
the particulate polymer is a core-shell structure body which has a core portion and a shell portion covering at least a portion of an outer surface of the core portion, and
a content ratio of the sulfosuccinic acid ester or the salt thereof is 0.5 part by weight or more, and 5 parts by weight or less relative to 100 parts by weight of the particulate polymer.

7. A non-aqueous secondary battery comprising a positive electrode, a negative electrode, a separator, and an electrolytic solution, wherein
one or more selected from the group consisting of the positive electrode, the negative electrode, and the separator includes the adhesive layer for a non-aqueous secondary battery according to claim 5 or 6.

## Patentansprüche

1. Eine Schlämmezusammensetzung für eine Adhäsivschicht einer nichtwässrigen Sekundärbatterie, umfassend ein partikelförmiges Polymer, einen Sulfobernsteinsäureester oder ein Salz davon, und Wasser, wobei
das partikelförmige Polymer ein Core-Shell-Struktur-Körper mit einer Core-Portion und einer Shell-Portion, die wenigstens einen Teil einer Außenoberfläche der Core-Portion bedeckt, ist, und
ein Gehaltsanteil des Sulfobernsteinsäureesters oder des Salzes davon 0,5 Gewichtsteile oder mehr und 5 Gewichtsteile oder weniger relativ zu 100 Gewichtsteilen des partikelförmigen Polymers beträgt.

2. Die Schlämmezusammensetzung für eine Adhäsivschicht einer nichtwässrigen Sekundärbatterie gemäß Anspruch 1, wobei ein Schwellungsgrad des partikelförmigen Polymers in Bezug auf die Elektrolytlösung mehr als 1fach und gleich oder weniger als 4fach ist.

3. Die Schlämmezusammensetzung für eine Adhäsivschicht einer nichtwässrigen Sekundärbatterie gemäß Anspruch 1 oder 2, wobei die Shell-Portion einen Teil der Außenoberfläche der Core-Portion bedeckt.

4. Ein Verfahren zur Herstellung einer Adhäsivschicht für eine nichtwässrige Sekundärbatterie, umfassend: Bilden eins Films aus einer Schlämmezusammensetzung für eine Adhäsivschicht einer nichtwässrigen Sekundärbatterie unter Verwendung der Schlämmezusammensetzung für eine Adhäsivschicht einer nichtwässrigen Sekundärbatterie gemäß irgendeinem der Ansprüche 1 bis 3, und Trocknen des Films um eine Adhäsivschicht für eine nichtwässrigen Sekundärbatterie zu erhalten.

5. Eine Adhäsivschicht für eine nichtwässrigen Sekundärbatterie, hergestellt unter Verwendung der Schlämmezusammensetzung für eine Adhäsivschicht einer nichtwässrigen Sekundärbatterie gemäß irgendeinem der Ansprüche 1 bis 3.

6. Eine Adhäsivschicht für eine nichtwässrigen Sekundärbatterie umfassend ein partikelförmiges Polymer und einen Sulfobernsteinsäureester oder ein Salz davon, wobei
das partikelförmige Polymer ein Core-Shell-Struktur-Körper mit einer Core-Portion und einer Shell-Portion, die wenigstens einen Teil einer Außenoberfläche der Core-Portion bedeckt, ist, und
ein Gehaltsanteil des Sulfobernsteinsäureesters oder des Salzes davon 0,5 Gewichtsteile oder mehr und 5 Gewichtsteile oder weniger relativ zu 100 Gewichtsteilen des partikelförmigen Polymers beträgt.

7. Eine nichtwässrige Sekundärbatterie umfassend eine positive Elektrode, eine negative Elektrode, einen Separator, und eine Elektrolytlösung, wobei
eins oder mehrere ausgewählt aus der Gruppe bestehend aus der positiven Elektrode, der negativen Elektrode, und dem Separator die Adhäsivschicht für eine nichtwässrigen Sekundärbatterie gemäß Anspruch 5 oder 6 umfasst.

## Revendications

1. Composition en suspension pour une couche adhésive d'une batterie secondaire non aqueuse comprenant un polymère particulaire, un ester d'acide sulfosuccinique ou un sel de celui-ci, et de l'eau,
dans laquelle
le polymère particulaire est un corps à structure noyau-enveloppe qui possède une partie noyau et une partie enveloppe recouvrant au moins une partie d'une surface externe de la partie noyau, et
un rapport de teneur de l'ester d'acide sulfosuccinique ou du sel de celui-ci est de 0,5 partie en poids ou plus, et de 5 parties en poids ou moins par rapport à 100 parties en poids du polymère particulaire.

2. Composition en suspension pour une couche adhésive d'une batterie secondaire non aqueuse selon la revendication 1, dans laquelle un degré de gonflement du polymère particulaire par rapport à la solution électrolytique est supérieur à 1 fois et 4 fois ou moins.

3. Composition en suspension pour une couche adhésive d'une batterie secondaire non aqueuse selon la revendication 1 ou 2, dans laquelle la partie enveloppe recouvre une partie de la surface externe de la partie noyau.

4. Procédé de production d'une couche adhésive pour une batterie secondaire non aqueuse, comprenant : la formation d'un film d'une composition en suspension pour une couche adhésive d'une batterie secondaire non aqueuse en utilisant la composition en suspension pour une couche adhésive d'une batterie secondaire non aqueuse selon l'une quelconque des revendications 1 à 3, et le séchage du film pour obtenir une couche adhésive pour une batterie secondaire non aqueuse.

5. Couche adhésive pour une batterie secondaire non aqueuse formée en utilisant la composition en suspension pour une couche adhésive d'une batterie secondaire non aqueuse selon l'une quelconque des revendications 1 à 3.

6. Couche adhésive pour batterie secondaire non aqueuse comprenant un polymère particulaire et un ester d'acide sulfosuccinique ou un sel de celui-ci, dans laquelle
le polymère particulaire est un corps à structure noyau-enveloppe qui possède une partie noyau et une partie enveloppe recouvrant au moins une partie d'une surface externe de la partie noyau, et
un rapport de teneur de l'ester d'acide sulfosuccinique ou du sel de celui-ci est de 0,5 partie en poids ou plus, et de 5 parties en poids ou moins par rapport à 100 parties en poids du polymère particulaire.

7. Batterie secondaire non aqueuse comprenant une électrode positive, une électrode négative, un séparateur et une solution électrolytique, dans laquelle
un ou plusieurs choisis dans le groupe constitué par l'électrode positive, l'électrode négative et le séparateur comprennent la couche adhésive pour une batterie secondaire non aqueuse selon la revendication 5 ou 6.
